# EUROPÄISCHE PATENTSCHRIFT

(11) **EP 3 034 922 B1**
(45) Veröffentlichungstag und Bekanntmachung des Hinweises auf die Patenterteilung: **14.02.2018**
(21) Anmeldenummer: 16154500.9
(22) Anmeldetag: 18.10.2013
(51) Int. Cl.: F16L 19/00, F16L 19/02, F16L 19/028, F02M 55/00, B60T 17/04

(54) **SCHRAUBVERBINDUNGSVORRICHTUNG FÜR ROHRLEITUNGEN, INSBESONDERE FÜR KRAFTFAHRZEUGROHRLEITUNGEN**
SCREW CONNECTION DEVICE FOR CONDUITS, IN PARTICULAR FOR MOTOR VEHICLE CONDUITS
DISPOSITIF DE RACCORD FILETÉ POUR CONDUITES TUBULAIRES, EN PARTICULIER POUR CONDUITES TUBULAIRES DE VÉHICULES AUTOMOBILES

(30) Priorität: 12.11.2012 DE 202012104347 U
(43) Veröffentlichungstag der Anmeldung: 22.06.2016
(62) Teilanmeldung aus: 13189344.8
(73) Patentinhaber: TI Automotive (Heidelberg) GmbH, 69123 Heidelberg (DE)
(72) Erfinder: Oezbenlikan, Uenal, 69231 Rauenberg (DE); Fiedler, Uwe, 68804 Altlußheim (DE); Stahn, Andreas, 69231 Rauenberg (DE)
(74) Vertreter: Rohmann, Michael

(56) Entgegenhaltungen:
- EP-A1- 1 260 750
- EP-A1- 1 624 183
- EP-A2- 1 241 348
- CH-A- 526 066
- DE-A1- 2 910 678
- DE-A1-102004 018 217
- DE-A1-102010 004 918
- US-A- 5 332 267
- US-A1- 2009 189 391

## Beschreibung

Die Erfindung betrifft eine Schraubverbindungsvorrichtung für Rohrleitungen, insbesondere für Kraftfahrzeugrohrleitungen. Im Rahmen der Erfindung wird zumindest eine Rohrleitung bzw. Kraftfahrzeugrohrleitung mit einer weiteren Rohrleitung bzw. Anschlussleitung oder einem Anschlussaggregat verbunden. - Kraftfahrzeugrohrleitung meint im Rahmen der Erfindung insbesondere eine Kraftstoffleitung oder eine Leitung für Bremsflüssigkeit.
Schraubverbindungsvorrichtungen der eingangs genannten Art sind aus der Praxis in unterschiedlichen Ausführungsformen bekannt. Viele dieser bekannten Schraubverbindungsvorrichtungen zeichnen sich durch ein nachteilhaft geringes Lockerungsdrehmoment bzw. Lösedrehmoment sowie durch einen zu geringen Lösedrehwinkel bzw. Lockerungsdrehwinkel aus. Beim Verschrauben dieser Schraubverbindungsvorrichtungen kann es insbesondere zu einem Mitdrehen der Rohrleitung kommen und durch eine Torsion der Rohrleitung wird Federkraft gleichsam in der Rohrleitung gespeichert. Die Torsion der Rohrleitung erzeugt ein Rückdrehmoment, das zu einem unerwünschten bzw. unkontrollierten Lockern bzw. Lösen der Schraubverbindungsvorrichtung führen kann. Ein unerwünschtes Lockern bzw. Lösen der Schraubverbindungsvorrichtung kann insbesondere auch durch Vibrationen hervorgerufen werden, wie sie oftmals in Kraftfahrzeugen auftreten. Ein solches Lockern bzw. Lösen der Schraubverbindungsvorrichtung kann sehr nachteilhafte Leckagen zur Folge haben.

Dokumente EP 1 241 348 A2, US 5,332,267, EP 1 260 750 A1 und DE 10 2010 004 918 A1 offenbaren jeweils eine Schraubverbindungsvorrichtung mit einem zwischen einer Überwurfmutter und einer Endform eines Rohrleitungsendes angeordneten Federelement.

Demgegenüber liegt der Erfindung das technische Problem zugrunde, eine Schraubverbindungsvorrichtung der eingangs genannten Art anzugeben, mit der ein unerwünschtes Lockern oder Lösen der Schraubverbindung auf effektive und funktionssichere Weise vermieden werden kann.
Zur Lösung dieses technischen Problems lehrt die Erfindung eine Schraubverbindungsvorrichtung gemäß den Merkmalen von Anspruch 1. Wie eingangs bereits dargelegt, meint Kraftfahrzeugrohrleitung im Rahmen der Erfindung insbesondere eine Kraftstoffleitung oder eine Rohrleitung für Bremsflüssigkeit. - Bevorzugt ist die zweckmäßigerweise stirnseitige Endform als Bördel ausgebildet. Bördel meint im Rahmen der Erfindung bekanntermaßen eine Aufweitung des Außendurchmessers der Rohrleitung bzw. des Rohrleitungsendes. Es liegt im Rahmen der Erfindung, dass die Endform bzw. der Bördel der Rohrleitung bzw. Kraftfahrzeugrohrleitung im verschraubten Zustand der Schraubverbindungsvorrichtung in dem Innenraum der Überwurfmutter aufgenommen ist.

Es liegt weiterhin im Rahmen der Erfindung, dass das Federelement im verschraubten Zustand der Schraubverbindungsvorrichtung an der Anschlagfläche der Überwurfmutter anliegt sowie an der Endformrückseite der Rohrleitung bzw. Kraftfahrzeugrohrleitung anliegt. Zweckmäßigerweise ist das Innengewinde der Überwurfmutter zumindest im vorderseitigen Bereich bzw. im anschlusselementseitigen Bereich der Überwurfmutter ausgebildet.

Es liegt im Rahmen der Erfindung, dass das Anschlusselement eine Anschlussrohrleitung oder eine mit einer Anschlussrohrleitung verbundene oder eine Anschlussrohrleitung aufnehmende Anschlusseinrichtung ist. Nach einer bevorzugten Ausführungsform der Erfindung ist das Anschlusselement ein eine Anschlussrohrleitung aufnehmender Schraubfitting mit einem Außengewinde. Gemäß einer anderen bevorzugten erfindungsgemäßen Ausführungsform ist das Außengewinde direkt an der anzuschließenden Rohrleitung bzw. an der Anschlussrohrleitung vorgesehen. Dann wird also die Überwurfmutter gleichsam auf die anzuschließende Rohrleitung bzw. auf die Anschlussrohrleitung aufgeschraubt. Es liegt im Rahmen der Erfindung, dass das Außengewinde des Anschlusselementes an dem der Überwurfmutter zugewandten Stirnende des Anschlusselementes angeordnet ist.

Zweckmäßigerweise liegt die Endform des Rohrleitungsendes der Rohrleitung im verschraubten Zustand der Schraubverbindungsvorrichtung mit einer Anschlussfläche an einer Komplementäranschlussfläche des Anschlusselementes an. Es empfiehlt sich, dass die Anschlussfläche der Endform schräg zur Längsachse L der Rohrleitung angeordnet ist. Dabei kann die Anschlussfläche konisch oder abgerundet ausgestaltet sein. Die Komplementäranschlussfläche des Anschlusselementes ist dann entsprechend ebenfalls konisch oder abgerundet ausgebildet.

Es liegt im Rahmen der Erfindung, dass die Anschlagfläche des Innenraums der Überwurfmutter im Zuge des Verschraubens mit dem Federelement in Kontakt kommt und das Federelement in Kontakt mit der Endformrückseite kommt, so dass das Federelement im Zwischenraum zwischen der Anschlagfläche der Überwurfmutter und der Endformrückseite der Rohrleitung eingeschlossen bzw. eingeklemmt wird. Zweckmäßigerweise läuft die Anschlagfläche der Überwurfmutter über den Innenumfang des Innenraumes um.

Es liegt fernerhin im Rahmen der Erfindung, dass das Federelement vor dem Verschrauben der Schraubverbindungsvorrichtung an der Rohrleitung angeordnet ist bzw. hinter der Endform der Rohrleitung angeordnet ist. Zweckmäßigerweise ist das Federelement vor dem Verschrauben auf die Rohrleitung aufgeschoben und wird somit von der Rohrleitung gleichsam gehalten. Es empfiehlt sich, dass das Federelement bzw. das auf die Rohrleitung aufgeschobene Federelement in Längsrichtung der Rohrleitung verschiebbar ist. - Vorzugsweise wird das Federelement im Zuge des Verschraubens nach der Aufnahme im Zwischenraum zwischen Anschlagfläche und Endformrückseite zweckmäßigerweise elastisch verformt. Dadurch übt das Federelement eine das Lösedrehmoment erhöhende Kraft auf die Überwurfmutter bzw. auf das Innengewinde der Überwurfmutter aus. - Gemäß besonders empfohlener Ausführungsform der Erfindung besteht das Federelement aus einem Metall bzw. im Wesentlichen aus einem Metall und vorzugsweise aus Stahl bzw. im Wesentlichen aus Stahl. Erfindungsgemäß ist die Anschlagfläche der Überwurfmutter schräg in Bezug auf die Längsachse L der Rohrleitung bzw. die Längsachse L der Überwurfmutter angeordnet. Erfindungsgemäß schließt die Anschlagfläche der Überwurfmutter mit der Längsachse L der Rohrleitung bzw. mit der Längsachse L der Überwurfmutter einen Winkel α von 20° bis 60°, bevorzugt von 30° bis 50° und nach einer Ausführungsvariante von 35° bis 45° ein. Es liegt im Rahmen der Erfindung, dass sich die vorstehend aufgeführten Winkelangaben auf den verschraubten Zustand der Schraubverbindungsvorrichtung beziehen. Erfindungsgemäß ist die überwurfmutterseitige Anschlagfläche des Federelementes schräg zur Längsachse L der Rohrleitung bzw. zur Längsachse L der Überwurfmutter angeordnet und schließt diese überwurfmutterseitige Anschlagfläche des Federelementes mit der Längsachse L der Rohrleitung einen Winkel α₁ von 20° bis 60°, empfohlenermaßen von 30° bis 50° und sehr bevorzugt von 35° bis 45° ein. Auch hier liegt es im Rahmen der Erfindung, dass sich die Winkelangaben auf den verschraubten Zustand der Schraubverbindungsvorrichtung beziehen. Erfindungsgemäß ist die endformseitige Anschlagfläche des Federelementes schräg zur Längsachse L der Rohrleitung angeordnet und schließt diese endformseitige Anschlagfläche des Federelementes mit der Längsachse L der Rohrleitung einen Winkel α₂ von 20° bis 60°, bevorzugt von 30° bis 50° und besonders bevorzugt von 35° bis 45° ein. Es liegt im Rahmen der Erfindung, dass sich diese Winkelangaben auf den verschraubten Zustand der Schraubverbindungsvorrichtung beziehen. Erfindungsgemäß ist die Endformrückseite der Endform der Rohrleitung schräg in Bezug auf die Längsachse L der Rohrleitung angeordnet. Erfindungsgemäß schließt diese Endformrückseite bzw. die entsprechende Anschlagfläche der Endformrückseite mit der Längsachse L der Rohrleitung einen Winkel α₃ von 20° bis 60°, empfohlenermaßen von 30° bis 50° und sehr empfohlenermaßen von 35° bis 45° ein. Auch diese Winkelangaben sind zweckmäßigerweise auf den verschraubten Zustand der Schraubverbindungsvorrichtung bezogen.
Eine alternative Ausführungsform ist dadurch gekennzeichnet, dass die Anschlagfläche der Überwurfmutter Bestandteil einer Anschlagschulter der Überwurfmutter ist und dass an die Anschlagfläche eine zur Anschlagfläche abgewinkelte Anlagefläche anschließt und dass vorzugsweise die Anlagefläche parallel bzw. im Wesentlichen parallel zur Längsachse L der Rohrleitung bzw. zur Längsachse L der Überwurfmutter angeordnet ist. Es liegt im Rahmen der Erfindung, dass die Anschlagfläche und die Anlagefläche der Anschlagschulter einen Winkel α₄ von 10° bis 170°, vorzugsweise von 20° bis 60°, bevorzugt von 30° bis 50° und besonders bevorzugt von 35° bis 45° einschließen.
Eine bevorzugte Ausführungsform der Erfindung ist dadurch gekennzeichnet, dass das Federelement lediglich bzw. im Wesentlichen lediglich zwischen der Anschlagfläche der Überwurfmutter und der Endformrückseite angeordnet ist.

Es liegt im Rahmen der Erfindung, dass die Rohrleitung eine zentralmittige Öffnung der Überwurfmutter durchgreift und dass die Anschlagfläche der Überwurfmutter an die zentralmittige Öffnung angrenzt bzw. anschließt. Dabei kann die zentralmittige Öffnung unmittelbar an die Anschlagfläche der Überwurfmutter anschließen.
Eine besonders empfohlene Ausführungsform der Erfindung ist dadurch gekennzeichnet, dass die endformseitige Anschlagfläche des Federelementes mit einer Beschichtung mit einem geringen Reibwert µ versehen ist. Zweckmäßigerweise ist auch die zugeordnete Endformrückseite bzw. die zugeordnete Anschlagfläche der Endformrückseite der Rohrleitung mit einer Beschichtung mit einem geringen Reibwert µ versehen.

Der Erfindung liegt die Erkenntnis zugrunde, dass mit der erfindungsgemäßen Schraubverbindungsvorrichtung Rohrleitungen mit unter hohem Druck stehendem fluidem Medium einfach und kostengünstig miteinander verbunden werden können. Die Realisierung des erfindungsgemäßen Federelementes erlaubt eine einfache und gezielte Einstellung bzw. Optimierung der Reibungskräfte zwischen dem Innengewinde und den zugeordneten Kontaktbereichen. Durch die Geometrie des Federelementes kann die Größe der Kontaktflächen zwischen dem Federelement und der Endform bzw. dem Bördel und zwischen dem Federelement und der Überwurfmutter bzw. deren Verhältnis auf einfache Weise festgelegt werden. Das anfängliche Verschrauben der erfindungsgemäßen Schraubverbindungsvorrichtung ist mit geringen Reibungskräften und geringen Torsionskräften verbunden. Im verschraubten Zustand erhöhen sich die Reibungskräfte und Torsionskräfte. Ein unbeabsichtigtes Lösen bzw. eine unbeabsichtigte Lockerung der Verbindung bzw. Schraubverbindung kann weitgehend vermieden werden. Vorteilhafterweise bleibt das Drehmoment, das einem Lösen der Schraubverbindung entgegenwirkt, auch beim Drehen bzw. Öffnen der Schraubverbindung um wenige Grad konstant, da das Federelement weiterhin eine entsprechende Kraft auf die Überwurfmutter und somit auf das Innengewinde der Überwurfmutter ausübt. Dagegen ist ein einfaches beabsichtigtes Lösen bzw. Lockern der Schraubverbindung möglich.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch eine erfindungsgemäße Schraubverbindungsvorrichtung im noch nicht verschraubten Zustand,
- Fig. 2: den Gegenstand gemäß Fig. 1 im teilweise verschraubten Zustand und,
- Fig. 3: den Gegenstand nach Fig. 1 im vollständig verschraubten Zustand.

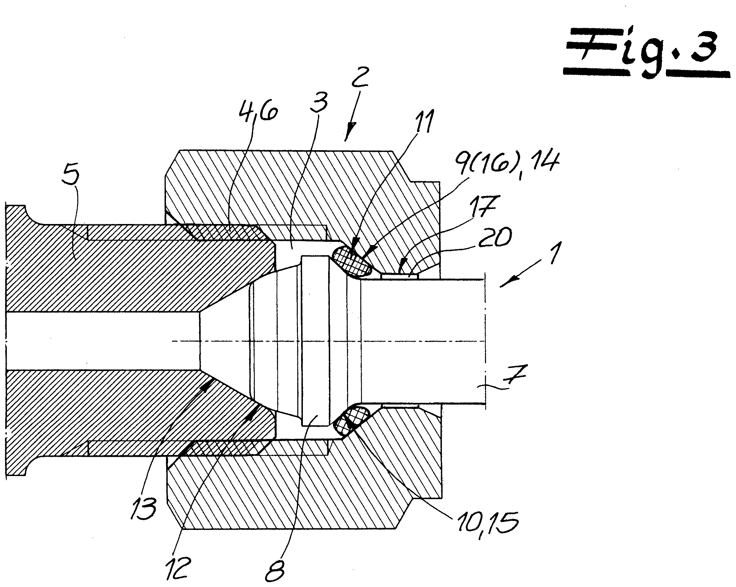

Die Figuren zeigen eine erfindungsgemäße Schraubverbindungsvorrichtung für Rohrleitungen 1, insbesondere für Kraftfahrzeugrohrleitungen. Die Schraubverbindungsvorrichtung weist eine Überwurfmutter 2 mit einem Innenraum 3 und mit einem über den Umfang des Innenraumes 3 umlaufenden Innengewinde 4 auf. Fernerhin weist die Schraubverbindungsvorrichtung ein Anschlusselement auf, das im Ausführungsbeispiel als Anschlussrohrleitung 5 ausgebildet ist und mit einem Außengewinde 6 ausgestattet ist. Im verschraubten Zustand der Schraubverbindungsvorrichtung (Fig. 3) greift das Außengewinde 6 in das Innengewinde 4 der Überwurfmutter 2 ein.

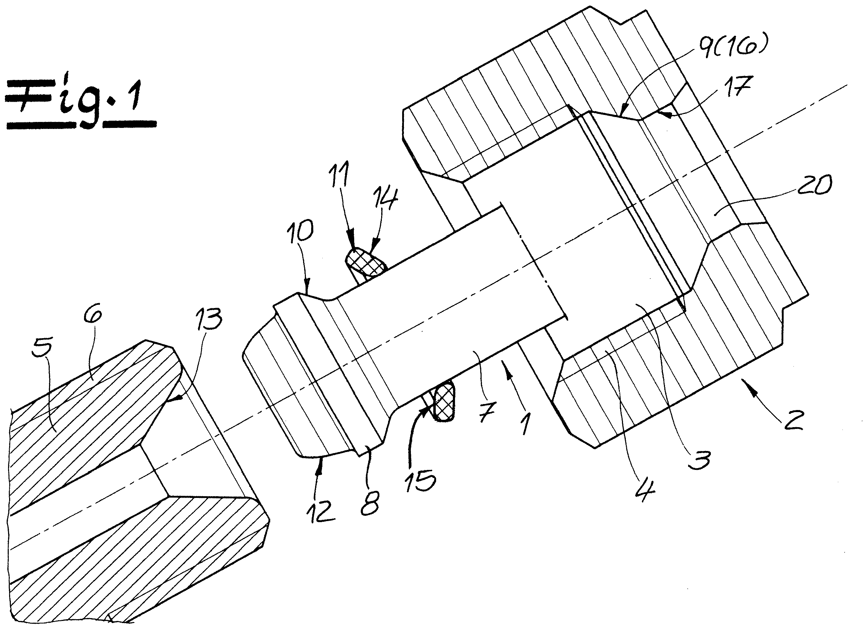

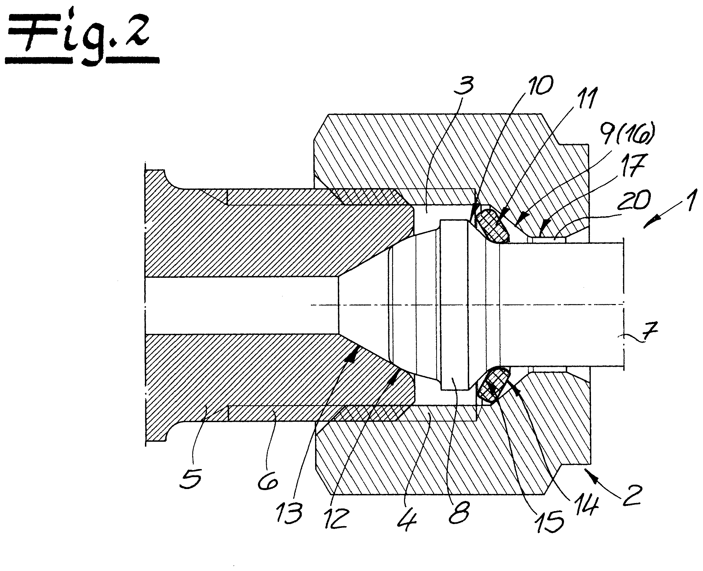

In der Überwurfmutter 2 bzw. in dem Innenraum 3 der Überwurfmutter 2 ist ein Rohrleitungsende 7 der Rohrleitung 1 aufgenommen und dieses Rohrleitungsende 7 weist einen stirnseitigen Bördel 8 auf. - Beim Verschrauben des Innengewindes 4 der Überwurfmutter 2 mit dem Außengewinde 6 des Anschlusselementes bzw. der Anschlussrohrleitung 5 wird eine im Innenraum 3 der Überwurfmutter 2 angeordnete rückseitige Anschlagfläche 9 in Richtung der Bördelrückseite 10 des Bördels 8 bewegt bzw. wird umgekehrt die Bördelrückseite 10 in Richtung der Anschlagfläche 9 der Überwurfmutter 2 bewegt (Fig. 2). Erfindungsgemäß ist zwischen der Anschlagfläche 9 der Überwurfmutter 2 und der Bördelrückseite 10 des Bördels 8 ein über den Umfang der Rohrleitung 1 umlaufendes Federelement 11 angeordnet. Zweckmäßigerweise und im Ausführungsbeispiel (Fig. 1) ist das Federelement 11 im noch nicht verschraubten Zustand der Schraubverbindungsvorrichtung an der Rohrleitung 1 angeordnet bzw. auf die Rohrleitung 1 aufgeschoben.

Im Zuge des weiteren Verschraubens der Schraubverbindungsvorrichtung kommt die Anschlagfläche 9 der Überwurfmutter 2 mit dem Federelement 11 in Kontakt bzw. das Federelement 11 kommt in Kontakt mit der Bördelrückseite 10, so dass das Federelement 11 im Zwischenraum zwischen Anschlagfläche 9 und Bördelrückseite 10 gleichsam eingeklemmt wird. Vorzugsweise und im Ausführungsbeispiel wird das Federelement dabei komprimiert. Es liegt im Rahmen der Erfindung, dass das Federelement 11 aus einem Metall und bevorzugt aus Stahl besteht.

Im verschraubten Zustand der Schraubverbindungsvorrichtung liegt zweckmäßigerweise der Bördel 8 des Rohrleitungsendes 7 mit einer Anschlussfläche 12 dichtend an einer Komplementäranschlussfläche 13 der Anschlussrohrleitung 5 an. Vorzugsweise und im Ausführungsbeispiel ist sowohl die Anschlussfläche 12 des Bördels 8 als auch die Komplementäranschlussfläche 13 der Anschlussrohrleitung 5 konisch ausgebildet.

Empfohlenermaßen und im Ausführungsbeispiel ist die Anschlagfläche 9 der Überwurfmutter 2 schräg in Bezug auf die Längsachse L der Rohrleitung 1 angeordnet. Bevorzugt und im Ausführungsbeispiel schließt die Anschlagfläche 9 der Überwurfmutter 2 im verschraubten Zustand der Schraubverbindungsvorrichtung mit der Längsachse L der Rohrleitung 1 einen Winkel α von 35° bis 45° und insbesondere einen Winkel α von etwa 40° ein. Zweckmäßigerweise ist die überwurfmutterseitige Anschlagfläche 14 des Federelementes 11 schräg zur Längsachse L der Rohrleitung 1 angeordnet und empfohlenermaßen schließt die überwurfmutterseitige Anschlagfläche 14 im verschraubten Zustand der Schraubverbindungsvorrichtung mit der Längsachse L der Rohrleitung 1 ebenfalls einen Winkel α₁ von 35° bis 45° und insbesondere einen Winkel α₁ von 40° ein. Es empfiehlt sich, dass auch die bördelseitige Anschlagfläche 15 des Federelementes 11 schräg zur Längsachse L der Rohrleitung 1 angeordnet ist und dass diese bördelseitige Anschlagfläche 15 im verschraubten Zustand der Schraubverbindungsvorrichtung einen Winkel α₂ von 35° bis 45° und insbesondere einen Winkel α₂ von etwa 40° mit der Längsachse L der Rohrleitung 1 einschließt. Fernerhin ist es bevorzugt, dass die Bördelrückseite 10 des Bördels 8 der Rohrleitung 1 schräg in Bezug auf die Längsachse L der Rohrleitung 1 angeordnet ist und dass die Bördelrückseite 10 im verschraubten Zustand der Schraubverbindungsvorrichtung einen Winkel α₃ von 35° bis 45° und vorzugsweise von etwa 40° mit der Längsachse L der Rohrleitung 1 einschließt.

Vorzugsweise und im Ausführungsbeispiel ist die Anschlagfläche 9 der Überwurfmutter 2 Bestandteil einer Anschlagschulter 16 der Überwurfmutter 2 und an die Anschlagfläche 9 schließt hier eine zur Anschlagfläche 9 abgewinkelte Anlagefläche 17 an. Vorzugsweise und im Ausführungsbeispiel ist die Anlagefläche 17 parallel zur Längsachse L der Rohrleitung 1 angeordnet. Empfohlenermaßen und im Ausführungsbeispiel schließen die Anschlagfläche 9 und die Anlagefläche 17 den Winkel α₄ von vorzugsweise 35° bis 45° und insbesondere 40° ein.

Im Ausführungsbeispiel nach den Figuren ist das Federelement 11 lediglich zwischen der Anschlagfläche 9 der Überwurfmutter 2 und der Bördelrückseite 10 des Bördels 8 angeordnet. Zweckmäßigerweise und im Ausführungsbeispiel schließt die Anschlagfläche 9 unmittelbar an die zentralmittige Öffnung 20 der Überwurfmutter 2 an, die von der Rohrleitung 1 durchgriffen wird.

Zumindest die bördelseitige Anschlagfläche 15 des Federelementes 11 ist mit einer Beschichtung mit einem geringen Reibwert µ versehen. Dadurch kann ein Auftreten von nachteilhaften Torsionskräften verhindert werden und dem unbeabsichtigten Lösen der Schraubverbindung entgegengewirkt werden.

## Patentansprüche

1. Schraubverbindungsvorrichtung für Rohrleitungen (1), insbesondere für Kraftfahrzeugrohrleitungen, mit einer Überwurfmutter (2) mit einem Innenraum (3) und mit einem über den Umfang des Innenraumes (3) umlaufenden Innengewinde (4) sowie mit einem Anschlusselement (5) mit Außengewinde (6), wobei in der Überwurfmutter (2) ein Rohrleitungsende (7) einer Rohrleitung (1) aufgenommen ist, wobei das Rohrleitungsende (7) eine stirnseitige Endform (8) aufweist,
wobei beim Verschrauben des Innengewindes (4) der Überwurfmutter (2) mit dem Außengewinde (6) des Anschlusselementes eine im Innenraum (3) der Überwurfmutter (2) angeordnete Anschlagfläche (9) in Richtung der Endformrückseite (10) der Endform (8) bewegbar ist bzw. umgekehrt,
wobei zwischen der Anschlagfläche (9) und der Endformrückseite (10) ein über den Umfang der Rohrleitung (1) umlaufendes Federelement (11) angeordnet ist,
wobei die Anschlagfläche (9) der Überwurfmutter (2) und eine überwurfmutterseitige Anschlagfläche (14) des Federelementes (11) und eine endformseitige Anschlagfläche (15) des Federelementes (11) und die Endformrückseite (10) der Endform (8) der Rohrleitung (1) schräg zur Längsachse L der Rohrleitung (1) angeordnet sind, wobei die Anschlagfläche (9) der Überwurfmutter (2) und die überwurfmutterseitige Anschlagfläche (14) des Federelementes (11) und die endformseitige Anschlagfläche (15) des Federelementes (11) und die Endformrückseite (10) der Endform (8) der Rohrleitung (1) jeweils mit der Längsachse L der Rohrleitung (1) einen Winkel von 20° bis 60° einschließt und wobei das Federelement (11) vor dem Verschrauben der Schraubverbindungvorrichtung auf die Rohrleitung aufschiebbar ist und in Längsrichtung der Rohrleitung (1) verschiebbar ist und im Zuge des Verschraubens nach der Aufnahme im Zwischenraum zwischen Anschlagfläche (9) der Überwurfmutter (2) und Endformrückseite (10) der Endform (8) elastisch verformt wird.

2. Schraubverbindungsvorrichtung nach Anspruch 1, wobei das Anschlusselement eine Anschlussrohrleitung (5) oder eine mit einer Anschlussrohrleitung (5) verbundene oder eine Anschlussrohrleitung (5) aufnehmende Anschlusseinrichtung ist.

3. Schraubverbindungsvorrichtung nach einem der Ansprüche 1 oder 2, wobei der Endform (8) des Rohrleitungsendes (7) im verschraubten Zustand der Schraubverbindungsvorrichtung mit einer Anschlussfläche (12) an einer Komplementäranschlussfläche (13) des Anschlusselementes anliegt.

4. Schraubverbindungsvorrichtung nach einem der Ansprüche 1 bis 3, wobei das Federelement (11) aus einem Metall, vorzugsweise aus Stahl besteht.

5. Schraubverbindungsvorrichtung nach einem der Ansprüche 1 bis 4, wobei die Anschlagfläche (9) der Überwurfmutter (2) mit der Längsachse L der Rohrleitung (1) einen Winkel α von 30° bis 50° und besonders bevorzugt von 35° bis 45° einschließt.

6. Schraubverbindungsvorrichtung nach einem der Ansprüche 1 bis 5, wobei die überwurfmutterseitige Anschlagfläche (14) des Federelementes (11) mit der Längsachse L der Rohrleitung (1) einen Winkel α₁ von 30° bis 50° und empfohlenermaßen von 35° bis 45° einschließt.

7. Schraubverbindungsvorrichtung nach einem der Ansprüche 1 bis 6, wobei die endformseitige Anschlagfläche (15) des Federelementes (11) mit der Längsachse L der Rohrleitung (1) einen Winkel α₂ von 30° bis 50° und besonders bevorzugt von 35° bis 45° einschließt.

8. Schraubverbindungsvorrichtung nach einem der Ansprüche 1 bis 7, wobei die Endformrückseite (10) der Endform (8) der Rohrleitung (1) mit der Längsachse L der Rohrleitung (1) einen Winkel α₃ von 30° bis 50° und besonders bevorzugt von 35° bis 45° einschließt.

9. Schraubverbindungsvorrichtung nach einem der Ansprüche 1 bis 8, wobei die Anschlagfläche (9) der Überwurfmutter (2) Bestandteil einer Anschlagschulter (16) der Überwurfmutter (2) ist und wobei an die Anschlagfläche (9) eine zur Anschlagfläche (9) abgewinkelte Anlagefläche (17) anschließt und wobei vorzugsweise die Anlagefläche (17) parallel zur Längsachse L der Rohrleitung (1) angeordnet ist.

10. Schraubverbindungsvorrichtung nach einem der Ansprüche 1 bis 9, wobei das Federelement (11) lediglich bzw. im Wesentlichen lediglich zwischen der Anschlagfläche (9) der Überwurfmutter (2) und der Endformrückseite (10) der Endform (8) angeordnet ist.

11. Schraubverbindungsvorrichtung nach einem der Ansprüche 1 bis 10, wobei die Rohrleitung (1) eine zentralmittige Öffnung (20) der Überwurfmutter (2) durchgreift und wobei die Anschlagfläche (9) der Überwurfmutter (2) an die zentralmittige Öffnung (20) angrenzt bzw. anschließt.

12. Schraubverbindungsvorrichtung nach einem der Ansprüche 1 bis 11, wobei die endformseitige Anschlagfläche (15) des Federelementes (11) mit einer Beschichtung (21) mit einem geringen Reibwert µ versehen ist.

## Claims

1. A screw connection fixture for pipes (1), in particular for motor vehicle pipes, with a union nut (2) with an interior (3) and a female thread (4) running over the circumference of the interior (3), as well as with a connecting element (5) with male thread (6),
wherein a pipe end (7) of a pipe (1) is accommodated in the union nut (2), wherein the pipe end (7) has a frontal end shape (8),
wherein, while screwing the female thread (4) of the union nut (2) with the male thread (6) of the connecting element, a stop surface (9) arranged in the interior (3) of the union nut (2) can be moved in the direction of the end shape rear side (10) of the end shape (8) and vice versa,
where a spring element (11) running over the circumference of the pipe (1) is arranged between the stop surface (9) and end shape rear side (10),
wherein the stop surface (9) of the union nut (2) and a union nut-side stop surface (14) of the spring element (11) and an end shape-side stop surface (15) of the spring element (11) and the end shape rear side (10) of the end shape (8) of the pipe (1) are inclined relative to the longitudinal axis L of the pipe (1), wherein the stop surface (9) of the union nut (2) and the union-nut side stop surface (14) of the spring element (11) and the end shape-side stop surface (15) of the spring element (11) and the end shape rear side (10) of the end shape (8) of the pipe (1) include an angle of between 20° and 60° with the respective longitudinal axis L of the pipe (1),
and wherein, before screwing the screw connection fixture, the spring element (11) can be slipped onto the pipe and shifted in the longitudinal direction of the pipe (1), and is elastically deformed during the screwing process after received in the gap between the stop surface (9) of the union nut (2) and end shape rear side (10) of the end shape (8).

2. The screw connection fixture according to claim 1, wherein the connecting element is a connection pipe (5) or a connecting system that is connected with a connection pipe (5) or accommodates a connection pipe (5) .

3. The screw connection fixture according to one of claims 1 or 2, wherein a connecting surface (12) of the end shape (8) of the pipe end (7) abuts against a complementary connecting surface (13) of the connecting element in the screwed state of the screw connection fixture.

4. The screw connection fixture according to one of claims 1 to 3, wherein the spring element (11) consists of a metal, preferably of steel.

5. The screw connection fixture according to one of claims 1 to 4, wherein the stop surface (9) of the union nut (2) includes an angle α with the longitudinal axis L of the pipe (1) of 30° to 50°, and especially preferably of 35° to 45°.

6. The screw connection fixture according to one of claims 1 to 5, wherein the union nut-side stop surface (14) of the spring element (11) includes an angle α₁ with the longitudinal axis L of the pipe (1) of 30° to 50° and as recommended of 35° to 45°.

7. The screw connection fixture according to one of claims 1 to 6, wherein the end shape-side stop surface (15) of the spring element (11) includes an angle α₂ with the longitudinal axis L of the pipe (1) of 30° to 50° and especially preferably of 35° to 45°.

8. The screw connection fixture according to one of claims 1 to 7, wherein the end shape rear side (10) of the end shape (8) of the pipe (1) includes an angle α₃ with the longitudinal axis L of the pipe (1) of 30° to 50° and especially preferably of 35° to 45°.

9. The screw connection fixture according to one of claims 1 to 8, wherein the stop surface (9) of the union nut (2) is a constituent of a stop shoulder (16) of the union nut (2), and wherein a stop surface (17) angled relative to the stop surface (9) adjoins the stop surface (9), and wherein preferably the stop surface (17) is arranged parallel to the longitudinal axis L of the pipe (1).

10. The screw connection fixture according to one of claims 1 to 9, wherein the spring element (11) is arranged only or essentially only between the stop surface (9) of the union nut (2) and the end shape rear side (10) of the end shape (8).

11. The screw connection fixture according to one of claims 1 to 10, wherein the pipe (1) engages through a central opening (20) of the union nut (2), and wherein the stop surface (9) of the union nut (2) borders or adjoins the central opening (20).

12. The screw connection fixture according to one of claims 1 to 11, wherein the end shape-side stop surface (15) of the spring element (11) is provided with a coating (21) having a slight coefficient of friction µ.

## Revendications

1. Dispositif de raccord à vis pour des conduites (1), en particulier pour des conduites de véhicule automobile, avec
un écrou chapeau (2) avec un espace intérieur (3) et avec un filetage interne (4) périphérique passant sur la périphérie de l'espace intérieur (3) ainsi qu'avec un élément de raccord (5) avec filetage externe (6),
une extrémité de conduite (7) d'une conduite (1) étant logée dans l'écrou chapeau (2), l'extrémité de conduite (7) comportant une forme finale (8) frontale,
une surface de butée (9) disposée dans l'espace intérieur (3) de l'écrou chapeau (2) pouvant être mobile en direction de la face arrière de forme finale (10) de la fore finale (8) ou inversée, lors du vissage du filetage interne (4) de l'écrou chapeau (2) avec le filetage externe (6) de l'élément de raccord,
un élément à ressort (11) périphérique passant sur la périphérie de la conduite (1) étant disposé entre la surface de butée (9) et la face arrière de forme finale (10),
la surface de butée (9) de l'écrou chapeau (2) et une surface de butée (14) côté écrou chapeau de l'élément à ressort (11) et une surface de butée (15) côté forme finale de l'élément à ressort (11) et la face arrière de forme finale (10) de la forme finale (8) de la conduite (1) étant disposées en biais par rapport à l'axe longitudinal L de la conduite (1), la surface de butée (9) de l'écrou chapeau (2) et la surface de butée (14) côté écrou chapeau de l'élément à ressort (11) à et la surface de butée (15) côté forme finale de l'élément à ressort (11) et la face arrière de la forme finale (10) de la forme finale (8) de la conduite (1) formant respectivement avec l'axe longitudinal L de la conduite (1) un angle de 20° à 60°,
et l'élément à ressort (11) pouvant être enfilé sur la conduite avant le vissage du dispositif de raccord à vis et pouvant être déplacé dans le sens longitudinal de la conduite (1) et étant élastiquement déformé au cours du vissage après le logement dans l'espace intermédiaire entre la surface de butée (9) de l'écrou chapeau (2) et la face arrière de forme finale (10) de la forme finale (8).

2. Dispositif de raccord à vis selon la revendication 1, l'élément de raccord étant une conduite de raccord (5) ou un dispositif de raccord relié à une conduite de raccord (5) ou logeant une conduite de raccord (5).

3. Dispositif de raccord à vis selon l'une quelconque des revendications 1 ou 2, la forme finale (8) de l'extrémité de conduite (7) s'appuyant à l'état vissé du dispositif de raccord à vis avec une surface de butée (12) sur une surface de raccord complémentaire (13) de l'élément de raccord.

4. Dispositif de raccord à vis selon l'une quelconque des revendications 1 à 3, l'élément à ressort (11) étant composé d'un métal, de préférence en acier.

5. Dispositif de raccord à vis selon l'une quelconque des revendications 1 à 4, la surface de butée (9) de l'écrou chapeau (2) formant avec l'axe longitudinal L de la conduite (1) un angle α de 30° à 50° et en particulier de préférence de 35° à 45°.

6. Dispositif de raccord à vis selon l'une quelconque des revendications 1 à 5, la surface de butée (14) côté écrou chapeau de l'élément à ressort (11) formant avec l'axe longitudinal L de la conduite (1) un angle α₁ de 30° à 50° et de façon recommandée de 35° à 45°.

7. Dispositif de raccord à vis selon l'une quelconque des revendications 1 à 6, la surface de butée (15) côté forme finale de l'élément à ressort (11) formant avec l'axe longitudinal L de la conduit (1) un angle α₂ de 30° à 50° et en particulier de préférence de 35° à 45°.

8. Dispositif de raccord à vis selon l'une quelconque des revendications 1 à 7, la face arrière de forme finale (10) de la forme finale (8) de la conduite (1) formant avec l'axe longitudinal L de la conduite (1) un angle α₃ de 30° à 50° et en particulier de préférence de 35° à 45°.

9. Dispositif de raccord à vis selon l'une quelconque des revendications 1 à 8, la surface de butée (9) de l'écrou chapeau (2) faisant partie intégrante d'un épaulement de butée (16) de l'écrou chapeau (2) et formant sur la surface de butée (9) une surface d'appui (17) inclinée vers la surface de butée (9) et la surface d'appui (17) étant de préférence disposée parallèlement à l'axe longitudinal L de la conduite (1) .

10. Dispositif de raccord à vis selon l'une quelconque des revendications 1 à 9, l'élément à ressort (11) n'étant ou pour l'essentiel étant uniquement disposé qu'entre la surface de butée (9) de l'écrou chapeau (2) et la face arrière de forme finale (10) de la forme finale (8) .

11. Dispositif de raccord à vis selon l'une quelconque des revendications 1 à 10, la conduite (1) pénétrant une ouverture centrale (20) de l'écrou chapeau (2) et la surface de butée (9) de l'écrou chapeau (2) étant adjacente ou se raccordant à l'ouverture centrale (20) .

12. Dispositif de raccord à vis selon l'une quelconque des revendications 1 à 11, la surface de butée (15) côté forme finale de l'élément à ressort (11) étant dotée d'un revêtement (21) avec un faible coefficient de frottement µ.
